# EUROPÄISCHE PATENTSCHRIFT

(11) **EP 2 318 899 B1**
(45) Veröffentlichungstag und Bekanntmachung des Hinweises auf die Patenterteilung: **10.12.2014**
(21) Anmeldenummer: 09777836.9
(22) Anmeldetag: 12.08.2009
(51) Int. Cl.: G06F 3/048, G08C 23/04

(54) **FERNSTEUERUNG UND VERFAHREN ZUR FERNSTEUERUNG VON MULTIMEDIAGERÄTEN**
REMOTE CONTROL AND METHOD FOR THE REMOTE CONTROL OF MULTIMEDIA APPLIANCES
TÉLÉCOMMANDE ET PROCÉDÉ DE COMMANDE À DISTANCE D'APPAREILS MULTIMÉDIA

(30) Priorität: 14.08.2008 DE 102008037750
(43) Veröffentlichungstag der Anmeldung: 11.05.2011
(73) Patentinhaber: Fm Marketing GmbH, 5162 Obertum am See (AT)
(72) Erfinder: MAIER, Ferdinand, A-5162 Obertum am See (AT)
(74) Vertreter: von Bülow, Tam
(86) Internationale Anmeldenummer: PCT/EP2009/005852
(87) Internationale Veröffentlichungsnummer: WO 2010/017975

(56) Entgegenhaltungen:
- EP-A- 1 542 189
- WO-A1-02/08882
- US-A1- 2003 117 377
- US-A1- 2008 098 331

## Beschreibung

Die Erfindung bezieht sich auf eine Fernsteuerung gemäß dem Oberbegriff des Patentanspruches 1 sowie auf ein Verfahren zur Fernsteuerung gemäß dem Oberbegriff des Patentanspruches 5.

Aus der EP 1 542 189 A2 ist eine Fernsteuerung mit einer berührungsempfindlichen Bedienfläche und mit einer Sendeeinheit zur Aussendung von codierten Signalen in Abhängigkeit von einer Berührung der Bedienfläche bekannt, wobei die Sendeeinheit die codierten Signale in Abhängigkeit der Bewegungsrichtung der Berührung aufeinanderfolgender Bereiche der Bedienfläche unabhängig vom Ort der Berührung der Bedienfläche erzeugt.

Die US 2003/0117377 A1 zeigt eine Fernsteuerung mit einem Bewegungssensor und einem Drucksensor, der eine berührungsempfindliche Bedienfläche bildet. Beide Sensoren arbeiten unabhängig voneinander und erzeugen Steuersignale, die drahtlos an ein zu steuerndes Gerät übertragen werden.

Die WO 02/08882 A1 offenbart ein Schnellschreibgerät mit einem Touchscreen und einem Stift. Durch Stiftbewegungen in vorgegebenen Strichrichtungen können vorbestimmte Buchstaben ausgewählt werden.

Aus der DE 196 53 840 A1 ist ein Handsender für eine fernbetätigbare Zentralverriegelung in Kraftfahrzeugen bekannt, die ein Gehäuse, ein Sendemittel, eine elektronische Steuerschaltung zum Steuern des Sendemittels und eine Solarzelle aufweist, die die Steuerschaltung mit elektrischer Energie speist.

Die GB 2 396 046 A zeigt einen Alarm-Schlüsselanhänger mit einem Gehäuse aus transparentem Kunststoff, in dessen Innerem eine Glühbirne angeordnet ist, die im Falle eines Alarmes zu leuchten beginnt. Weiter sind an dem Gehäuse zwei Tastenschalter zum Aktivieren und Deaktivieren des Alarms vorgesehen.

Die US 2003/0206128 A1 zeigt eine Universalfernsteuerung mit einem durchsichtigen Acrylgehäuse, in dessen Innerem eine Glühbirne angebracht ist. Über ein Suchgerät kann die Glühbirne zum Leuchten gebracht und ein akustischer Geber aktiviert werden.

Die DE 20 2005 015 165 U1 zeigt eine fernsteuerbare Schließvorrichtung für ein Fahrzeug, bei der eine Tastatur und ein Display von einem Tastbildschirm (Touch-Screen) gebildet werden.

Fernsteuerungen zur Steuerung elektronischer Geräte, wie z.B. Fernsehgeräten, Radios, Videorecordern, Satellitenempfänger, DVD-Spielern, aber auch von sonstigen Haushaltsgeräten, wie Beleuchtungseinrichtungen, Rolläden, Garagentoren und ähnlichem, sind heute weit verbreitet. Sie haben üblicherweise ein Gehäuse mit Batteriefach, eine Leiterbahnplatte mit elektronischen Bauelementen, eine Tastatur sowie eine Sendeeinheit, wie z.B. eine Infrarot-Sende-Diode. Eine der Tasten wird üblicherweise zum Ein- und Ausschalten der Fernsteuerung verwendet. Den übrigen Tasten sind jeweils eine oder mehrere Funktionen zugewiesen, derart, daß beim Drücken der Taste ein codiertes Infrarot-Signal an das zu steuernde Gerät ausgesandt wird.

Problematisch bei solchen Fernsteuerungen ist die unübersichtliche und große Anzahl von Tasten. Manche Fernbedienungen haben mehr als 40 Tasten deren Funktionen sich die meisten Benutzer nicht merken können.

Die EP 1 185 922 B1 schlägt daher zur Vereinfachung der Bedienung eines Multimediasystems eine gescrollte Kreuzungspunktnavigation an einer Benutzerschnittstelle vor, die eine Fernsteuerung mit nur wenigen Tasten benötigt, über die auf einem Bildschirm, wie z.B. einem Fernsehempfänger, alle verfügbaren Funktionen aufgerufen werden können.

Anstelle einer Tastatur mit einzelnen mechanisch zu betätigenden Tasten ist auch schon vorgeschlagen worden, eine berührungsempfindliche Tastplatte, die heute allgemein als Touch-Pad bezeichnet wird, zu verwenden (vgl. DE 199 08 406 A1, DE 100 13 444 A1, EP 0 813 743 B1) oder auch einen sogenannten Touch-Screen, d.h. eine Anzeigeeinrichtung, die gleichzeitig berührungsempfindlich ist (vgl. US-A-5237327, US-A-5353016 oder EP 0 946 918 B1).

Touch-Pads und Touch-Screens sind allgemein bekannt und beispielsweise in der WO 92/04724 A1 oder DE 20 2007 001 624 U1 beschrieben. Sie arbeiten nach verschiedenen Prinzipien, unter anderem kapazitiv, resistiv, optisch oder mit Schallwellen (surface acustic wave). Diese zusammengefaßt als "berührungsempfindliche Tastplatte" oder "berührungsempfindliche Bedienfläche" bezeichneten Einrichtungen erzeugen ein elektrisches Signal, das im allgemeinen eindeutig einem oder mehreren Orten an seiner Oberfläche zugeordnet ist, die von einem Gegenstand oder einem Finger berührt werden.

Es ist somit möglich, die Funktionen einer Tastatur mit individuellen mechanischen Tasten durch eine solche berührungsempfindliche Tastplatte zu ersetzen, indem man bestimmten Bereichen der Tastplatte bestimmte Funktionen zuweist.

Bei der oben genannten WO 92/04724, der DE 199 08 406 A1, der DE 100 13 444 A1 und der US 5,353,016 ist die Tastplatte jeweils transparent und besteht beispielsweise aus einer durchsichtigen Glasplatte.

Problematisch hierbei ist es gleichwohl, daß der Benutzer für die Bedienung der Fernsteuerung bestimmte örtlich genau vordefinierte Bereiche berühren muß, was in der Regel erfordert, daß der Benutzer den Touch-Screen ansehen muß, um die örtliche richtige Stelle für die gewünschte Funktion zu Berühren. In abgedunkelten Räumen, wie z.B. beim Fernsehen oder bei Filmvorführungen ist dies mühsam. Für Personen, mit beeinträchtigtem Sehvermögen ergeben sich ebenfalls Schwierigkeiten, beispielsweise wenn sie "weitsichtig" sind (Alterssichtigkeit) und für das Sehen im Nahbereich eine Brille benötigen, für den Fernbereich, in dem sich der Bildschirm befindet, dagegen nicht.

Aufgabe der Erfindung ist es daher, die Fernsteuerung der eingangs genannten Art dahingehend zu verbessern, daß sie ohne Sichtkontakt einwandfrei zu bedienen ist.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Das Grundprinzip der Erfindung basiert darauf, daß die Bewegungsrichtung der Berührung der berührungsempfindlichen Bedienfläche ausgewertet wird und darauf die entsprechend codierten Signale der Fernsteuerung ermittelt werden. Dies erfolgt also unabhängig vom genauen Ort der Berührung der Bedienfläche. Mit anderen Worten muß der Benutzer nur "irgendwo" auf der Bedienfläche eine Bewegung durchführen, indem er mit einem Finger oder einem sonstigen Gegenstand über die Bedienfläche fährt, worauf ausschließlich in Abhängigkeit von der Bewegungsrichtung, und nicht vom Ort, entsprechende Steuersignale erzeugt werden.

Für eine menügesteuerte Benutzerführung genügen häufig bereits vier Steuerbefehle, nämlich die Steuerbefehle "AUF", "AB", "LINKS" und "RECHTS". Diesen vier Steuerbefehlen und den damit verknüpften codierten Signalen werden vorbestimmte Bewegungsrichtungen innerhalb vorgegebener Bereiche zugeordnet. Bei vier Befehlen genügt es damit, vier Kreisquadranten zu definieren. Definiert man beispielsweise in einem kartesischen Koordinatensystem dessen vertikale Achse mit dem Winkel 0° so würde ein erster Quadrant, der durch die Winkel - 45° bis + 45° definiert ist, eine Vertikalrichtung V+ definieren. Ein Quadrant mit den Winkeln 180° +/- 45° würde eine Vertikalrichtung V- definieren. Die beiden übrigen Quadranten im Bereich +/- 90° +/- 45° würden horizontale Richtungen H+ und H- definieren.

Zum Aufrufen einer der Richtung V+ zugewiesenen Funktion muß der Benutzer also nur irgendwo auf der Tastatur in einer in dem ersten Quadranten (- 45° bis + 45°) liegenden Richtung entlangfahren.

Natürlich ist auch möglich, mehr als vier Bewegungsrichtungen zu definieren, beispielsweise indem man die zuvor genannten Bereiche enger faßt und z.B. acht Segmente mit je einem Winkelbereich von 45° definiert, so daß man weitere vier diagonale Bewegungsrichtungen und damit weitere vier Befehle erhält.

Die Erfindung basiert des weiteren auf einem bidirektionalen Betrieb der Fernsteuerung mit einem zu steuernden Gerät wodurch auch andere Bewegungen mit komplexeren Bewegungsmustern aktiviert werden können, wobei dann geradlinige Bewegungen der Berührung aufeinanderfolgender Bereiche der Bedienfläche deaktiviert sind. Hier ist beispielsweise eine Kreisbewegung mit einem Vollkreis, einem Halbkreis, einem Viertelkreis oder auch komplexere Bewegungen, wie ein Pluszeichen, Buchstaben oder Ziffern, möglich, wobei auch diese Bewegungsmuster absolut unabhängig vom Ort der Berührung der Bedienfläche sind. Die einfache Funktion, die ausschließlich auf eine einzige Bewegungsrichtung abstellt und unabhängig von der Länge der Bewegungsrichtung ist, muß dabei deaktiviert werden, da bei einem komplexeren Muster mit mehreren aufeinanderfolgenden unterschiedlichen Bewegungsrichtungen sonst eine Vielzahl von Befehlen auslösen würde. Die Umschaltung in diese geänderte Betriebsart mit mehreren unterschiedlichen aufeinanderfolgenden Bewegungsrichtungen, die dann ein Muster ergeben, erfolgt vorzugsweise in Abhängigkeit von einem Menüsystem des fernzusteuernden Gerätes, was einen bidirektionalen Betrieb zwischen dem fernzusteuernden Gerät und der Fernsteuerung bedingt. Die Fernsteuerung erhält also für diesen Fall von dem fernzusteuernden Gerät ein entsprechendes Umschaltsignal.

Auch können rasch aufeinanderfolgende Hin- und Herbewegungen in derselben Richtung und auch das kurze ein- oder mehrmalige Berühren ein- und derselben, jedoch beliebig räumlich angeordneten Stelle der Bedienfläche zu vorbestimmten Signalen führen.

Zur Personalisierung des jeweiligen Benutzers kann zusätzlich eine Identifikationseinrichtung vorgesehen sein, beispielsweise in Form eines Fingerabdrucklesegerätes, das entweder in einem Bereich der berührungsempfindlichen Bedienfläche angeordnet ist oder auch bevorzugt außerhalb derselben an einer schmalen Seitenfläche der Fernbedienung, wobei in diesem Fall der Benutzer zum "Lesen" des Fingerabdruckes mit einem Finger, vorzugsweise dem Daumen, an dem Fingerabdrucklesegerät entlang streichen muß.

In dem Gehäuse der Fernsteuerung kann zusätzlich ein Lage- oder Bewegungssensor angeordnet sein. Bei einem Lagesensor kann in Abhängigkeit von der Lage der Fernsteuerung ein vorbestimmtes Signal an ein oder mehrere fernzusteuernde Geräte ausgesandt werden. Besonders bevorzugt ist es, wenn der Lagesensor in einer Position der Fernsteuerung, bei der die berührungsempfindliche Bedienfläche nach unten (zum Erdmittelpunkt hin) ausgerichtet ist, ein Abschaltsignal für das fernzusteuernde Gerät, wie z.B. ein Fernsehgerät, aussendet. Durch dieses Signal wird das fernzusteuernde Gerät beispielsweise in einen "Stand-by"-Betrieb gebracht. Umgekehrt kann beim Umdrehen der Fernsteuerung in eine Position, bei der die berührungsempfindliche Bedienfläche nach oben weist, ein Einschaltsignal an ein oder mehrere fernzusteuernde Geräte gesandt werden, mit dem diese aus dem "Stand-by"-Betrieb in aktiven Betrieb geschaltet werden.

Diese Signale können auch schon dann ausgesandt werden, wenn die Fernsteuerung auf eine ihrer Kanten gestellt wird, bei der also die Ebene der berührungsempfindlichen Bedienfläche vertikal ausgerichtet ist.

Ergänzend kann durch einen Bewegungssensor auch vorbestimmten Bewegungen ein bestimmtes codiertes Signal zugeordnet sein, das automatisch bei Ausführung der vorbestimmten Bewegung ausgesandt wird. Beispielsweise kann der Befehl für eine Auswahlfunktion mit einer vorbestimmten Bewegung der Fernsteuerung verknüpft sein. Die Auswahlfunktion in diesem Sinne bezeichnet die Aktivierung einer bestimmten auf einem Bildschirm angezeigten Funktion. Hier ist in der Fernsteuerung wiederum ein vorbestimmtes auszusendendes Signal zugeordnet.

Weiter kann vorgesehen sein, daß die Fernsteuerung selbst in einen Stromsparmodus umgeschaltet wird, wenn für eine vorbestimmte Zeitdauer keine Bewegung oder Lageänderung und kein Berühren der berührungsempfindlichen Bedienfläche stattgefunden hat. Umgekehrt kann vorgesehen sein, daß die Fernsteuerung von dem Stromsparmodus in einen aktiven Betriebsmodus umgeschaltet wird, wenn die Fernsteuerung selbst bewegt oder in ihrer Lage geändert wird oder wenn die berührempfindliche Bedienfläche berührt wird.

Vorzugsweise nimmt die berührungsempfindliche Bedienfläche eine Oberfläche der Fernsteuerung vollständig ein.

Die berührungsempfindliche Hedienfläche kann nach irgendeinem bekannten Prinzip arbeiten. Bevorzugt ist eine kapazitive Abtastung der Fläche. Möglich sind aber auch druckempfindliche Sensoren, Ultraschallsensoren nach dem Prinzip der Oberflächenwellen, Wärmesensoren oder optische Sensoren.

Die Energieversorgung der Fernsteuerung kann über Solarzellen erfolgen, die einen Speicher, wie z.B. einen Akkumulator oder einen Kondensator aufladen. Bei Verwendung eines Akkumulators kann auch eine induktive Aufladung erfolgen oder eine Aufladung über galvanische Kontakte in Zusammenwirken mit einer Ladestation.

Weitere Einzelheiten der Erfindung ergeben sich aus der nachfolgenden Beschreibung eines Ausführungsbeispieles im Zusammenhang mit der Zeichnung, von der zeigt:
- Figur 1: eine Prinzipskizze eines Multimediasystems mit einer Fernsteuerung nach der Erfindung;
- Figur 2: eine schematische Explosionsdarstellung eines Ausführungsbeispieles einer Fernsteuerung nach der Erfindung;
- Figur 3: eine Prinzipskizze zur Erläuterung von Bewegungsrichtungen;
- Figur 4: eine schematische Draufsicht auf eine
- und 5: berührungsempfindliche Bedienplatte zur Erläuterung von Steuerungsmöglichkeiten; und
- Figur 6 und 7: eine schematische Draufsicht auf die bei der Erfindung verwendete Bedienfläche.

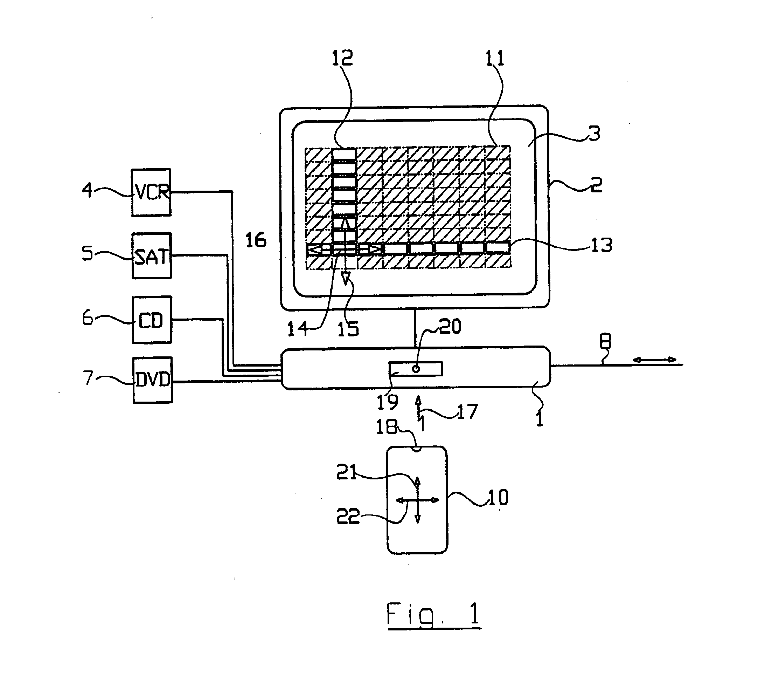

In Figur 1 ist ein Multimediasystem mit einer zentralen Steuereinheit 1 gezeigt, an die ein Fernsehgerät 2 mit einem Bildschirm 3 angeschlossen ist, sowie eine Vielzahl von weiteren Multimediageräten 4, 5, 6, und 7, die beispielsweise ein Videorecorder 4, ein Satellitenempfänger 5, ein CD-Spieler 6, ein DVD-Spieler 7 sind, wobei generell beliebige steuerbare elektrische Geräte angeschlossen werden können, wie z.B. auch Türöffner, Lichtsteuerungen, Alarmanlagen, Torschließanlagen, Heizungsanlagen, Videokameras, sonstige Haushaltsgeräte etc. Schließlich kann das zentrale Steuergerät auch sonstige Kommunikationsverbindungen 8 aufweisen, wie z.B. eine Verbindung mit dem Internet, einem Telefonnetz oder sonstigen Kommunikationsnetzwerken.

Alle an die zentrale Steuereinheit angeschlossenen Geräte können von einer Fernsteuerung 10 in zusammenwirken mit der zentralen Steuereinheit 1 gesteuert werden, was beispielsweise über ein Menüsystem erfolgt, das auf dem Bildschirm 3 angezeigt wird. Das Menüsystem ist im Prinzip in Form einer Matrix 11 organisiert, die eine Vielzahl von Spalten 12 und eine Vielzahl von Zeilen 13 aufweist. Jedem Feld der Matrix ist ein individueller Steuerbefehl für eines der angeschlossenen Geräte zugewiesen. Jedes Feld der Matrix ist über die Fernsteuerung 10 ansteuerbar, was vorzugsweise dadurch geschieht, daß die gesamte Matrix 11 durch horizontale und/oder vertikale Verschiebung so bewegt wird, daß ein selektiertes Feld in einen Focusbereich 14 verschoben wird, der sich ortsfest an einer vorbestimmten Stelle des Bildschirmes 3 befindet. Besonders übersichtlich wird dieses Menüsystem dann, wenn nur eine Spalte 12 und eine Zeile 13 sichtbar sind und alle übrigen Felder der Matrix ausgeblendet sind, was in Figur 1 durch eine Schraffur dargestellt ist. Der Focusbereich 14 befindet sich dann im Schnittpunkt der sichtbaren Spalte 12 und der sichtbaren Zeile 13.

Wie durch einen vertikalen Pfeil 15 und einen horizontalen Pfeil 16 angedeutet, läßt sich also die gesamte Matrix vertikal und horizontal "durchscrollen", wobei sich immer nur ein Feld im Focusbereich 14 befindet. Somit läßt sich eine Selektion eines bestimmten Feldes und damit eines bestimmten Befehles durch vier Bewegungsbefehle realisieren, nämlich die Befehle "AUF", "AB", "LINKS" und "RECHTS". Ist das gewünschte Feld mit der entsprechenden Funktion für das entsprechende Gerät im Focusbereich 14, so benötigt man noch einen Auswahl- oder Aktivierungsbefehl. Weiter ist es zweckmäßig noch einen "ZURÜCK"-Befehl vorzusehen, um gegebenenfalls verschiedene Menüebenen "rückwärts" zu durchlaufen.

Mit einem solchen Menüsystem benötigt man prinzipiell nur sechs Steuerbefehle, wobei für spezielle Anwendungen natürlich auch zusätzliche Befehle vorgesehen sein können.

Zumindest diese genannten sechs Steuerbefehle sowie eventuell auch noch zusätzliche Steuerbefehle werden von der tastenlosen Fernsteuerung 10 erzeugt und als codierte Signale an die zentrale Steuereinheit 1 übermittelt, was vorzugsweise drahtlos mit codierten Infrarot-Signalen erfolgt, die durch den Pfeil 17 angedeutet sind.

Die Fernsteuerung 10 hat dementsprechend eine Sendeeinheit 18 mit einer Sendediode und die zentrale Steuereinheit 1 hat eine entsprechende Empfangseinheit 19 mit einer Empfangsdiode 20. Prinzipiell kann auch eine bidirektionale Kommunikation zwischen der zentralen Steuereinheit 1 und der Fernsteuerung 10 vorgesehen sein, um Rückmeldungen von der Steuereinheit 1 an die Fernsteuerung 10 zu übermitteln oder um ein "Update" der Software der Fernsteuerung 10 vorzunehmen.

Für die oben genannten Befehle zum Verschieben der Matrix entsprechend den Pfeilen 15 und 16 sowie für weitere Steuerbefehle ist die Fernsteuerung 10 so ausgebildet, daß diese Befehle nur durch Bewegung eines Fingers oder eines sonstigen Gegenstandes über eine berührempfindliche Bedienfläche der Fernsteuerung 10 aufgerufen werden und nicht, wie beim Stand der Technik, durch Berühren fest vordefinierter Schaltflächenbereiche. Analog der Richtung der Pfeile 15 und 16 sind entsprechende Bewegungen auf der Bedienfläche der Fernsteuerung 10 durchzuführen, was durch die Pfeile 21 und 22 angedeutet ist.

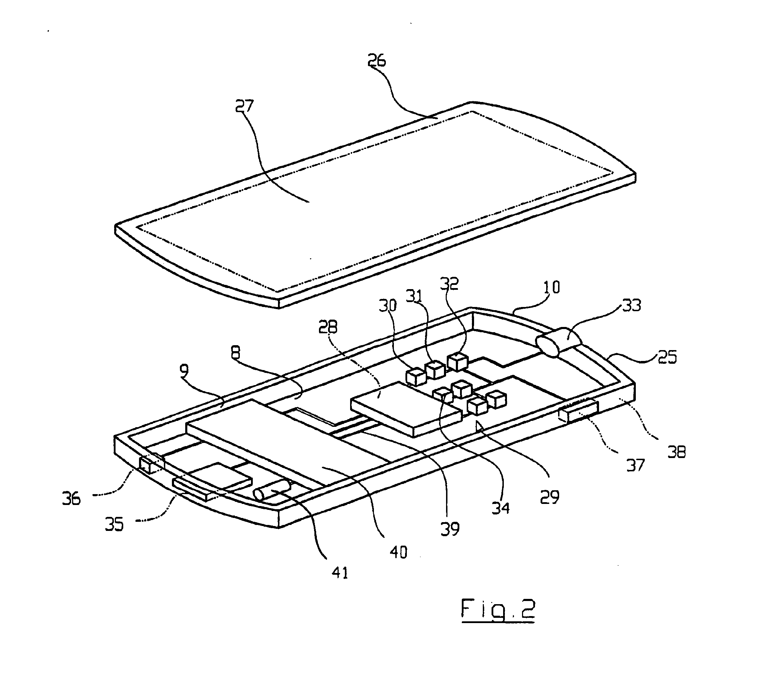

Figur 2 zeigt die Fernsteuerung 10 in einer Explosionsdarstellung. Die Fernsteuerung 10 hat ein Gehäuse 25 und einen Gehäusedeckel 26, dessen Außenseite weitestgehend vollständig mit einer berührungsempfindlichen Bedienfläche 27 versehen ist, wobei der Deckel 26 und die Bedienfläche 27 transparent sind. Beispielsweise besteht der Deckel 26 aus Glas oder einem transparenten Kunststoff, wie z.B. Acrylglas. In montiertem Zustand ist der Deckel 26 fest und zumindest spritzwasserdicht mit dem Gehäuse 25 verbunden. Auch das Gehäuse 25 kann aus Glas oder sonstigem transparentem Material sein. Ebenso ist es aber auch möglich, das Gehäuse aus sonstigen beliebigen Materialien, insbesondere aus Kunststoff herzustellen. Alle benötigten Bauelemente mit Ausnahme der Bedienfläche 27 sind im inneren des Gehäuses angeordnet. So enthält das Innere des Gehäuses einen Mikroprozessor 28 sowie weitere elektronische Bauelemente 29, von denen eines ein Lagesensor 30 ist. Ein weiteres Bauelement kann ein Bewegungssensor 31 sein. Ein weiteres Bauelement ist eine Treiberschaltung 32 zur Ansteuerung einer Infrarot-Sendediode 33, die zusätzlich auch als Empfangsdiode ausgebildet sein kann, wobei dann die Treiberschaltung 32 auch die Funktion einer Empfangseinheit übernehmen kann. Weiter enthalten die Bauelemente mindestens einen Speicherbaustein 34, der auch im Mikroprozessor 28 integriert sein kann. Optional ist ein weiterer Speicherbaustein 35 in Form einer sogenannten SIM-Karte 35 vorgesehen.

Optional kann auch eine externe Schnittstelle 36 vorgesehen sein, beispielsweise in Form eines an sich bekannten USB-Anschlusses (USB = Universal serial Bus).

Weiter ist eine Identifikationseinrichtung 37 vorgesehen, die beispielsweise ein Fingerabdrucklesegerät ist, das hier so angeordnet ist, daß es zu einer schmalen Seite 38 des Gehäuses 25 hinweist und somit getrennt von der Bedienfläche 27 ist. Es ist aber auch möglich, ein solches Fingerabdrucklesegerät in der Bedienfläche 27 anzuordnen. Alle bisher genannten Bauteile sind direkt oder indirekt über Leitungen 39 mit dem Mikroprozessor 28 verbunden.

Die Energieversorgung der Fernsteuerung 10 kann über einen Akkumulator 40 erfolgen, der induktiv über eine Spule 41 aufladbar ist. Alternativ kann der Akkumulator 40 auch über den USB-Anschluß 36 aufgeladen werden. Schließlich ist es auch möglich, an der der Bedienfläche 27 abgewandten Unterseite des Gehäuses 25 Solarzellen anzubringen, über die der Akkumulator 40 aufgeladen wird.

Die gesamte Fernsteuerung 10 hat keinerlei Tasten oder extern mechanisch zu betätigenden Schalter. Vielmehr ist sie ausschließlich durch ihre Lage in Verbindung mit dem Lagesensor 30 und eventuell durch bestimmte Bewegungen in Zusammenwirken mit dem Bewegungssensor 31 sowie über die berührungsempfindliche Bedienfläche 27 zu betätigen. Somit hat die Fernsteuerung ein weitestgehend glattes Gehäuse, was nicht nur ein ansprechendes Design schafft, sondern auch die Gefahr des Eindringens von Schmutz oder Feuchtigkeit verhindert sowie keinerlei Gefahr ausgesetzt ist, daß irgendwelche beweglichen Teile, wie Schalter, Taster etc. mechanisch beschädigt werden.

Die wesentliche Bedienung der Fernsteuerung erfolgt durch Bewegung eines Fingers oder sonstigen Gegenstandes über die Bedienfläche 27.

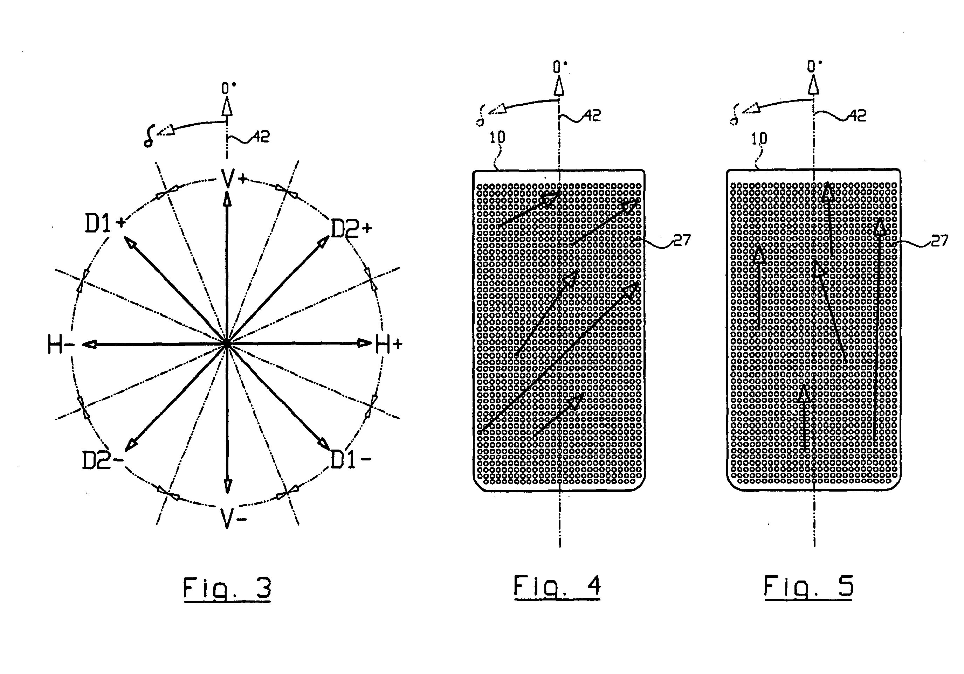

Figur 3 soll dies verdeutlichen. Im dort dargestellten Diagramm sind acht Bewegungsrichtungen definiert, nämlich:
Vertikal "AUF" (V+),
vertikal "AB" (V-),
horizontal "RECHTS" (H+),
horizontal "LINKS" (H-),
diagonal "LINKS AUF" (D1+)
diagonal "RECHTS AB" (D1-),
diagonal "RECHTS AUF" (D2+), und
diagonal "LINKS AB" (D2-).

Jeder dieser acht Bewegungsrichtungen ist ein Sektor mit einem Winkelbereich von 22,5° zugewiesen. Dies bedeutet, daß eine Bewegung über die Bedienfläche 27 in einer Richtung δ daraufhin untersucht und ausgewertet wird, in welchen der in Figur 3 definierten Sektoren sie fällt. Es wird sozusagen im mathematischen Sinne ein Vektor gebildet und dessen Richtung bzw. Winkel δ bezogen auf eine Achse, beispielsweise die Längsachse 42 bestimmt.

Wichtig ist dabei, daß dies vollständig unabhängig davon erfolgt, an welcher Stelle der Bedienfläche 27 die Bewegung durchgeführt wird, da allein die Richtung bzw. die Winkellage δ des Vektors maßgeblich ist.

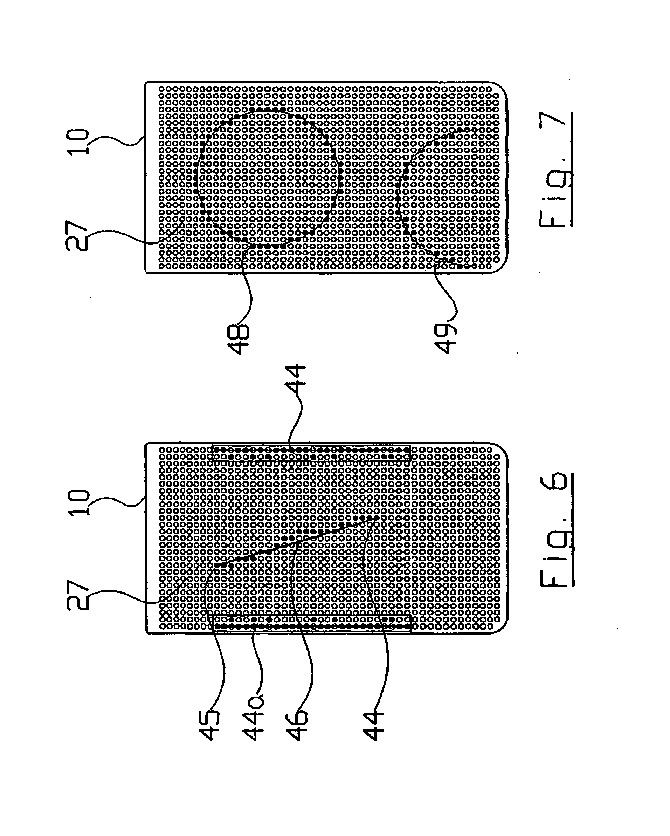

Dies wird im Zusammenhang mit den Figuren 4 und 5 verdeutlicht. In Figur 4 sind diverse berührungsempfindliche Elemente in Form von Kreisen dargestellt. Fährt man mit einem Finger irgendwo auf der Bedienfläche 27 über diese, so werden zeitlich nacheinander einzelne Bereiche (Kreise) berührt, die in Figur 6 als schwarze, dunkle Punkte dargestellt sind. Daraus läßt sich ein Vektor bilden, entsprechend den in den Figuren 4 und 5 dargestellten Pfeilen, der gegenüber der Hauptachse 42 einen Winkel δ einnimmt.

Alle in Figur 4 dargestellten Pfeile haben gegenüber einer Hauptrichtung entsprechend einer Längsachse 42 einen Winkel δ, der in den mit D2+ bezeichneten Sektor der Figur 3 fällt.

In analoger Weise haben alle in Figur 5 dargestellten Pfeile einen Winkel 5, der in den in Figur 3 mit V+ bezeichneten Sektor fällt. Jedes mal wenn ein einem der Pfeile zuzuordnender Winkel δ in einem der Sektoren erkannt wird, wird ein zugeordneter codierter Befehl als Infrarot-Signal ausgesendet. Die Länge der Pfeile in Figur 4 und 5 ist von untergeordneter Bedeutung. Zur eindeutigen Identifikation einer Bewegung ist lediglich eine gewisse Mindestlänge vordefiniert, um beispielsweise eine Bewegung von einem mehrfachen Berühren (z.B. sog. Doppelklick) mehr oder weniger ein- und derselben Stelle unterscheiden zu können.

Für manche Anwendungsfälle ist es ausreichend, nur vier Bewegungsbefehle entsprechend V+, V-, H+, H- vorzusehen. In diesem Fall können die einzelnen Sektoren breiter sein also beispielsweise +/- 45° zur jeweiligen Hauptrichtung.

Figur 6 zeigt in einer Draufsicht auf die berührungsempfindliche Schaltfläche im mittleren Bereich eine Folge von dunklen Punkten, die nacheinander berührt wurden. Generell läßt sich aus Anfangs- und Endpunkt 44 und 45 bereits ein Vektor 46 bilden, der ausgewertet werden kann. Die Erkennungssicherheit wird allerdings gesteigert, wenn durch ein mathematisches Verfahren auch die übrigen angefahrenen Punkte berücksichtigt werden und daraus der Vektor 46 gebildet wird.

Im rechten Bereich der Figur 6 ist ein Sonderbereich 44 dargestellt, der für Sonderfunktionen reserviert sein kann. Beispielsweise ist es bei der Fernsteuerung von Fernsehgeräten wünschenswert, die Sonderfunktion "laut" und "leise" für den Ton ohne Aufruf der Menüsteuerung auswählen zu können, wobei eine Bewegung in diesem Sonderbereich 44 nach oben die Lautstärke vergrößert und nach unten verkleinert. Für andere sehr häufig verwendete Sonderfunktionen, wie z.B. Kanalwechsel beim Fernsehen, können weitere Sonderbereiche vorgesehen sein, die zweckmäßigerweise nahe dem Rand der Bedienfläche 27 anzuordnen sind, wie z.B. ein Sonderbereich 44a in Figur 6, der beispielsweise für die Funktion "ZURÜCK" reserviert ist, mit der der Benutzer eine Menüebene zurückgehen kann.

Figur 7 zeigt, daß auch weitere Bewegungen möglich sind, um vorbestimmte Befehle auszulösen, beispielsweise die Bewegung in Form eines Vollkreises 48 oder eines Halbkreises 49, wobei auch hier der Drehsinn (im Uhrzeigersinn oder gegen den Uhrzeigersinn) berücksichtigt werden kann. In der Praxis wird man sich selbstverständlich auf einfache geometrische Figuren beschränken, um die Bedienung einfach zu gestalten, wobei allerdings auch komplexere Muster möglich sind, wie beispielsweise Buchstaben, Ziffern oder sonstige Symbole. Hier werden also von der Sendeeinheit codierte Signale in Abhängigkeit von mehreren aufeinanderfolgenden Bewegungsrichtungen der Berührung aufeinanderfolgender Bereiche der Bedienfläche erzeugt, wobei auch dies wiederum absolut unabhängig vom jeweiligen Ort der Berührung ist. Zur Unterscheidung geradliniger Bewegungen mit nur einer einzigen Bewegungsrichtung (wie in Figur 6 dargestellt) muß für die Erkennung komplexerer Muster (wie in Figur 7 dargestellt) die Fernsteuerung auf eine andere Betriebsart umgeschaltet werden, was bevorzugt durch die zentrale Steuereinheit 1 (Figur 1) erfolgt, wobei dann ein bidirektionaler Betrieb zwischen der Steuereinheit 1 und der Fernsteuerung 10 stattfindet. In dieser Betriebsart, die in Abhängigkeit von einem Menüsystem der Steuereinheit aktiviert wird, werden Bewegungen mit nur einer einzigen Bewegungsrichtung ignoriert, da ansonsten schon eine anfängliche Bewegung entlang einem komplexeren Muster einen Vektor mit einer Bewegungsrichtung generieren würde.

Eine weitere für die Praxis wichtige Sonderfunktion, die man primär für die Auswahlfunktion reserviert, besteht darin, daß irgendein Bereich nur kurz ein- oder zweimal angetippt wird, ohne daß eine Bewegung längs eines längeren Weges durchgeführt wird. Auch hier ist es jedoch vollkommen gleichgültig, an welcher Stelle die Bedienfläche in dieser Weise berührt wird, so daß der Benutzer nicht, wie sonst bei einem sog. Touch-Screen einen genau vordefinierten Bereich berühren muß.

Zur weiteren Erleichterung der Bedienung kann die Bedienfläche 27 auch mit einer visuellen Anzeige ausgestattet sein. Auch können in Abhängigkeit von bestimmten ausgesandten Signalen (17 in Figur 1) akustische Laute erzeugt werden, um dem Benutzer eine akustische Bestätigung zu geben.

Wie eingangs erwähnt, können vom Bewegungssensor 31 (Figur 1) bestimmte Bewegungen erfaßt und beim Erreichen vorgegebener Schwellwerte in zugeordnete codierte Steuersignale umgewandelt werden. Auch können die von Bewegungen ausgelösten Steuerbefehle dazu verwendet werden, unterschiedliche zu steuernde Geräte und damit entsprechende Menüs auszuwählen. Von besonderer Bedeutung ist auch, daß durch den Bewegungssensor 31 oder den Lagesensor 30 fernzusteuernde Geräte ein- und ausgeschaltet werden können.

Auch ist es möglich, bei Verwendung eines "Touch-Screen" die Abbildung des jeweiligen Menüs bzw. der Matrix 11 der Figur 1 auf der berührempfindlichen Bedienfläche 27 vorzunehmen.

## Patentansprüche

1. Fernsteuerung mit einer berührungsempfindlichen Bedienfläche (27) und mit einer Sendeeinheit (18, 33) zur Aussendung von codierten Signalen (17) in Abhängigkeit von einer Berührung der Bedienfläche (27), wobei die Sendeeinheit (18,33) die codierten Signale (17) in Abhängigkeit der Bewegungsrichtung (δ) der Berührung aufeinanderfolgender Bereiche der Bedienfläche (27) unabhängig vom Ort der Berührung der Bedienfläche (27) erzeugt, **dadurch gekennzeichnet,**
**dass** die Sendeeinheit (18, 33) die codierten Signale (17) in Abhängigkeit von mehreren aufeinanderfolgenden unterschiedlichen Bewegungsrichtungen (δ) der Berührung aufeinanderfolgender Bereiche der Bedienfläche (27) unabhängig vom Ort der Berührung der Bedienfläche erzeugt, wobei die Fernsteuerung (10) durch bidirektionalen Betrieb im Zusammenwirken mit einer Steuereinheit (1) in eine Betriebsart umgeschaltet ist, bei der eine Berührung aufeinanderfolgender Bereiche der Bedienfläche (27) in nur einer Bewegungsrichtung (δ) ignoriert wird.

2. Fernsteuerung nach Anspruch 1 **dadurch gekennzeichnet, dass** die Fernsteuerung (10) einen Bewegungssensor (31) und/oder einen Lagesensor (30) aufweist und dass die Fernsteuerung (10) vorbestimmte codierte Signale (17) in Abhängigkeit von Ausgangssignalen des Lagesensors (30) und/oder des Bewegungssensors (31) erzeugt, insbesondere ein Signal zum Ausschalten eines oder mehrerer fernzusteuernder Geräte (1).

3. Fernsteuerung nach Anspruch 2, **dadurch gekennzeichnet, dass** die Fernsteuerung (10) in einer Position, bei der die Bedienfläche (27) vertikal ausgerichtet ist oder nach unten in Richtung zum Erdmittelpunkt weist, ein vorbestimmtes codiertes Signal (17) zum Ausschalten eines oder mehrerer fernzusteuernder Geräte erzeugt.

4. Fernsteuerung nach einem der Ansprüche 1 bis 3, **dadurch gekennzeichnet, dass** die Fernsteuerung (10) eine Identifikationseinrichtung (37) aufweist und dass die codierten Signale (17) zusätzlich in Abhängigkeit von einem Ausgangssignal der Identifikationseinrichtung (37) erzeugt werden.

5. Verfahren zur Fernsteuerung von Multimediasystemen bei dem durch Berührung einer berührungsempfindlichen Bedienfläche vorbestimmte codierte Signale ausgesandt werden, wobei eine Bewegungsrichtung (δ) der Berührung aufeinanderfolgender Bereiche der Bedienfläche (27) ermittelt wird und die vorbestimmten codierten Signale in Abhängigkeit von der Bewegungsrichtung (δ) unabhängig vom Ort der Berührung der Bedienfläche (27) ausgewählt werden,
**dadurch gekennzeichnet,**
**dass** mehrere aufeinanderfolgende Bewegungsrichtungen der Berührung aufeinanderfolgender Bereiche der Bedienfläche ermittelt werden und dass die vorbestimmten codierten Signale in Abhängigkeit von den mehreren erfaßten Bewegungsrichtungen (δ) unabhängig vom Ort der Berührung der Bedienfläche (27) ausgewählt werden, wobei eine Berührung mit nur einer einzigen Bewegungsrichtung (δ) ignoriert wird und wobei weiter die Fernsteuerung durch einen bidirektionalen Betrieb in Zusammenwirken mit einer Steuereinheit (1) auf diese Betriebsart umgeschaltet wird.

6. Verfahren nach Anspruch 5, **dadurch gekennzeichnet, dass** Bewegungen der Fernsteuerung durch einen Bewegungssensor und/oder die Lage der Fernsteuerung durch einen Lagesensor erfaßt werden und dass vorbestimmte codierte Signale in Abhängigkeit vom Ausgangssignal des Bewegungssensors und/oder des Lagesensors erzeugt werden.

7. Verfahren nach Anspruch 6, **dadurch gekennzeichnet, dass** die in Abhängigkeit von Ausgangssignalen des Bewegungssensors und/oder des Lagesensors erzeugte codierte Signale ein oder mehrere fernzusteuernde Geräte aus- und/oder einschalten.

## Claims

1. Remote control with a touch-sensitive control surface (27) and with a transmitting unit (18,33) for the sending of encoded signals (17) in dependence on a touching of the control surface (27), wherein the transmitting unit (18,33) generates the encoded signals (17) in dependence on the direction of movement (δ) of the touching of successive regions of the control surface (27) regardless of the place of touching of the control surface (27)
**characterized in that** the transmitting unit (18, 33) generates the encoded signals (17) in dependence on several different successive directions of movement (δ) of the touching of successive regions of the control surface (27) regardless of the place of touching of the control surface, wherein the remote control (10) is switched by bidirectional operation in concert with a control unit (1) to an operating mode in which a touching of successive regions of the control surface (27) in only one direction of movement (δ) is ignored.

2. Remote control according to claim 1 **characterized in that** the remote control (10) has a motion sensor (31) and/or a position sensor (30) and the remote control (10) generates predetermined encoded signals (17) in dependence on output signals of the position sensor (30) and/or the motion sensor (31), especially a signal for switching off one or more remotely controlled appliances (1).

3. Remote control according to claim 2 **characterized in that** the remote control (10) in one position where the control surface (27) is vertically oriented or points downward in the direction of the center of the earth generates a predetermined encoded signal (17) for switching off one or more remotely controlled appliances.

4. Remote control according to one of claims 1 to 3 **characterized in that** the remote control (10) has an identification device (37) and the encoded signals (17) are additionally generated in dependence on an output signal of the identification device (37).

5. Method for the remote control of multimedia systems, wherein by touching a touch-sensitive control surface predetermined encoded signals are sent out, wherein a direction of movement (δ) of the touching of successive regions of the control surface (27) is ascertained and the predetermined encoded signals are selected in dependence on the direction of movement (δ) regardless of the place of touching of the control surface (27) **characterized in that** several successive directions of movement of the touching of successive regions of the control surface are ascertained and the predetermined encoded signals are selected in dependence on the several detected directions of movement (δ) regardless of the place of touching of the control surface (27), wherein a touching with only a single direction of movement (δ) is ignored and wherein the remote control furthermore is switched by a bidirectional operation in concert with a control unit (1) to this operating mode.

6. Method according to claim 5 **characterized in that** movements of the remote control are detected by a motion sensor and/or the position of the remote control by a position sensor and predetermined encoded signals are generated in dependence on the output signal of the motion sensor and/or the position sensor.

7. Method according to claim 6 **characterized in that** the encoded signals generated in dependence on output signals of the motion sensor and/or the position sensor turn on and/or off one or more remotely controlled appliances.

## Revendications

1. Télécommande pourvue d'une surface de commande tactile (27) et d'une unité émettrice (18, 33) destinée à émettre des signaux codés (17) en fonction d'un toucher de la surface de commande (27), l'unité émettrice (18,33) générant les signaux codés (17) en fonction de la direction de mouvement (δ) du toucher de zones successives de la surface de commande (27) quel que soit l'endroit où la surface de commande (27) est touchée,
**caractérisée**
**en ce que** l'unité émettrice (18, 33) génère les signaux codés (17) en fonction de plusieurs directions successives différentes de mouvement (δ) du toucher de zones successives de la surface de commande (27) quel que soit l'endroit où la surface de commande est touchée, la télécommande (10) étant commutée par une activité bidirectionnelle en coopération avec une unité de commande (1) vers un mode de fonctionnement dans lequel un toucher de zones successives de la surface de commande (27) dans une seule direction de mouvement (δ) est ignoré.

2. Télécommande selon la revendication 1 **caractérisée en ce que** la télécommande (10) comprend un capteur de mouvement (31) et/ou un capteur de position (30) et **en ce que** la télécommande (10) génère des signaux codés prédéfinis (17) en fonction de signaux de sortie du capteur de position (30) et/ou du capteur de mouvement (31), en particulier un signal destiné à la mise à l'arrêt d'un ou de plusieurs appareils télécommandés (1).

3. Télécommande selon la revendication 2, **caractérisée en ce que**, dans une position dans laquelle la surface de commande (27) est orientée verticalement ou pointe vers le bas en direction du centre de gravité terrestre, la télécommande (10) génère un signal codé prédéfini (17) destiné à la mise à l'arrêt d'un ou de plusieurs appareils télécommandés.

4. Télécommande selon l'une quelconque des revendications 1 à 3, **caractérisée en ce que** la télécommande (10) comprend un dispositif d'identification (37) et **en ce que** les signaux codés (17) sont générés en outre en fonction d'un signal de sortie du système d'identification (37).

5. Procédé destiné à la télécommande de systèmes multimédias, dans lequel des signaux codés prédéfinis sont émis par le biais d'un toucher d'une surface de commande tactile, une direction de mouvement (δ) du toucher de zones successives de la surface de commande (27) étant déterminée et les signaux codés prédéfinis étant sélectionnés en fonction de la direction de mouvement (δ) quel que soit l'endroit où la surface de commande (27) est touchée,
**caractérisé**
**en ce que** plusieurs directions de mouvement successives du toucher de zones successives de la surface de commande sont déterminées et en ce que les signaux codés prédéfinis sont sélectionnés en fonction des multiples directions de mouvement (δ) détectées quel que soit l'endroit où la surface de commande (27) est touchée, un toucher avec uniquement une seule direction de mouvement (δ) étant ignoré, et en outre la télécommande étant commutée vers ce mode de fonctionnement par une activité bidirectionnelle en coopération avec une unité de commande (1).

6. Procédé selon la revendication 5, **caractérisé en ce que** des mouvements de la télécommande sont détectés par un capteur de mouvement et/ou la position de la télécommande est détectée par un capteur de position et **en ce que** des signaux codés prédéfinis sont générés en fonction du signal de sortie du capteur de mouvement et/ou du capteur de position.

7. Procédé selon la revendication 6, **caractérisé en ce que** les signaux codés générés en fonction des signaux de sortie du capteur de mouvement et/ou du capteur de position mettent en marche et/ou à l'arrêt un ou plusieurs appareils télécommandés.
